(19)

Europäisches Patentamt
European Patent Office
Office européen des brevets

(11) **EP 3 594 885 A1**

(12) **EUROPEAN PATENT APPLICATION**

(43) Date of publication:
**15.01.2020 Bulletin 2020/03**

(51) Int Cl.:
***G06Q 30/02*** *(2012.01)*

(21) Application number: **18183008.4**

(22) Date of filing: **11.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Loopme Ltd.**
**London EC1 8FN (GB)**

(72) Inventors:
• **Newnham, Leonard**
**London, EC1N 8FN (GB)**

• **Renov, Oleksii**
**49131 Dnipro (UA)**

(74) Representative: **CSY Herts**
**Helios Court**
**1 Bishop Square**
**Hatfield, Hertfordshire AL10 9NE (GB)**

Remarks:
Amended claims in accordance with Rule 137(2) EPC.

(54) **A METHOD OF SELECTING DATA FOR DELIVERY AND DISPLAY ON A USER DEVICE**

(57) A method and apparatus for selecting data for delivery and display on a user device comprising the steps of receiving a request for data to be delivered to a user, and the request including a user id which identifies the user, retrieving information about the user from a visitor profile store using the user id, retrieving a set of possible actions from an actions store, ordering the retrieved actions using a relatively computationally cheap algorithm, taking the ordered actions and applying a relatively computationally expensive scoring algorithm using the retrieved information from the visitor profile store, and applied to each of the ordered actions in order, until the score is greater than a threshold, and delivering the action to a user device associated with the said user, for display thereon.

Fig 1

**Description**

Field

This invention relates to techniques for automated decision-making based on data about a customer. For example, this may include, but is not restricted to, serving targeted content on a website or mobile device, email targeting, providing real-time recommendations to a customer call centre, or other similar service. Examples of some of the disclosed techniques, as applied to advertisement targeting to mobile or static devices, are described herein.

**Background**

Within a targeted advertisement serving system, upon receipt of a request for targeted content, there will generally be many possible choices or actions that the system can take. For example, a request may be received from a mobile device to fill an advertisement slot within a software application on that device. An advertisement slot is a space reserved within a software application or web page for display of an advertisement. Such advertisements can be static images, html content, videos, pop-ups or other display mechanisms. Typically, an advertising campaign will consist of a set of related messages to promote a product, brand or service. The actual content that is shown is called the creative. The possible actions could be either serving one of the creatives that are suitable for that advertisement slot, or to ignore the request completely. The system attempts to choose the action most likely to maximise some system goal, for example click rate, acquisition rate, purchase value, retail store visit rate or any other key performance metric (KPM) the system operator wishes to maximise.

A targeted advertisement serving system will be required to operate within a set of constraints. There will commonly be temporal limits on the number of times an action or a campaign should be chosen according to some advertising budget. For example, a contract with an advertiser may stipulate a required number of daily impressions for an advertising campaign. A typical system will contain many thousands of such advertising campaigns and an optimal system will allocate these impressions to the best prospects for each advertisement creative, hereafter referred to as actions.

To maximise the expected benefit of such a system, a predictive model may be used to evaluate the available actions in terms of expected reward. The predictive model is a mathematical function that can be used to estimate the value of selecting any particular action. Examples include linear functions produced by machine learning such as linear regression, non-linear functions produced by support vector machines or deep learning. Alternatively, models built without machine learning such as rule-based systems can be used.

Frequently there is a trade-off between complexity of the model (and hence its expressive power) and the speed with which a prediction can be made for a particular profile. Linear models typically learn a simplified function assuming linearity and are fast to execute but are unable to represent complex patterns in the data. Non-linear techniques, such as deep learning, are capable of learning and representing complex interactions and subtle nuances within the data but their extra complexity makes execution of the model more computationally intensive.

Evaluations of such models need to be performed in real-time so that a creative is served to a user without appreciable delay. Many evaluation functions are computationally expensive enough that it becomes impractical to evaluate all the available actions in real-time before a decision is taken.

Thus, there is a need to improve the efficiency of decision making in these circumstances.

**Summary of the Invention**

In a first aspect, the invention provides, a method of selecting data for delivery and display on a user device comprising the steps of receiving a request for data to be delivered to a user, and the request including a user id which identifies the user, retrieving information about the user from a visitor profile store using the user id, retrieving a set of possible actions from an actions store, ordering the retrieved actions using a relatively computationally cheap algorithm, taking the ordered actions and applying a relatively computationally expensive scoring algorithm using the retrieved information from the visitor profile store, and applied to each of the ordered actions in turn, until the score is greater than a threshold (this threshold may vary from action to action), and delivering the action to a user device associated with the said user, for display thereon.

In a second aspect the invention provides a computer program product carrying program steps which when executed on suitable computer hardware causes the computer hardware to carry out the steps of the first aspect.

This invention presents a method of efficiently selecting a near optimal action without explicit evaluation of all available actions. This thus reduces the complexity of the process and allows more efficient use to be made of computer hardware. For example, lower powered hardware may be used to deliver the same performance as in the prior art, but at lower cost, or equivalent hardware is able to process more actions than in the prior art.

## Detailed Description

Embodiments of the invention will now be described, by way of example, with reference to the drawings in which:-

Figure 1 is a top-level block diagram illustrating an embodiment of an intelligent ad server displaying targeted content on mobile devices;
Figure 2 is a schematic diagram of an intelligent Ad Server;
Figure 3 is a flowchart showing some of the steps of an Action Selector; and
Figure 4 is a flowchart showing a Threshold Calculator.

The preferred implementation solves the problem by first ranking the actions according to the performance of each action across the general population according to the chosen KPM. For example, if the KPM is click through rate the actions with higher click-through rate should appear higher up the list. This ranking should be statistically robust, i.e. there should be confidence that those actions at the head of the list are indeed performing better than those further down. To ensure this, a mechanism that forces sufficient exploration during action choice is incorporated so that all actions are served sufficiently so their relative performances can be established. The preferred implementation uses a bandit algorithm, such as the Upper Confidence Bound bandit algorithm [UCB], (as described from example in Auer, P., Cesa-Bianchi, N. & Fischer, P. Machine Learning (2002) 47: 235., the contents of which is hereby incorporated by reference) to control this exploration-exploitation trade-off.

In alternative implementations, other ordering methodologies, such as delivery priority, assigned to each action by a human operator, may be superimposed on the default UCB ranking.

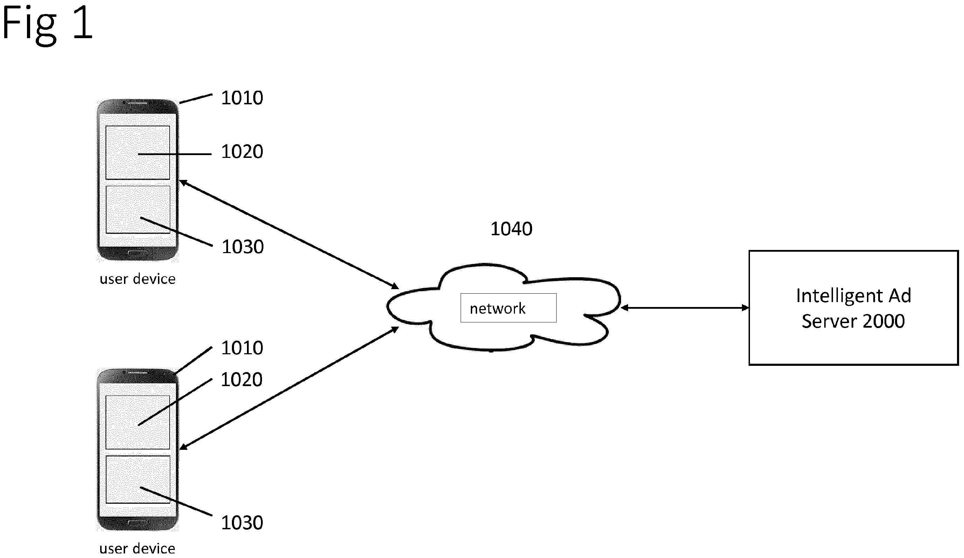

Turning to Figure 1, the system is shown as including at least one user device 1010. As an example, Figure 1 depicts two user devices, 1010, and an intelligent ad server, 2000, connected via a network, 1040. In various embodiments, there may be a plurality of user devices 1010.

The user devices, 1010, may run applications or programs containing an area reserved for advertising, 1020. Other areas, 1030, may provide the application content.

The user devices, 1010, intelligent ad server, 2000, and network, 1040, each can be provided as conventional communication devices of any type. For example, the user devices 1010, may be smart-phones as depicted in Figure 1; however, in various embodiments, the user devices 1010, may be various suitable devices including a tablet computer, laptop computer, desktop computer, gaming device, or the like without limitation.

In various embodiments, the network 1040 may comprise one or more suitable wireless or wired networks, including the Internet, a local-area network (LAN), a wide area network (WAN), or the like.

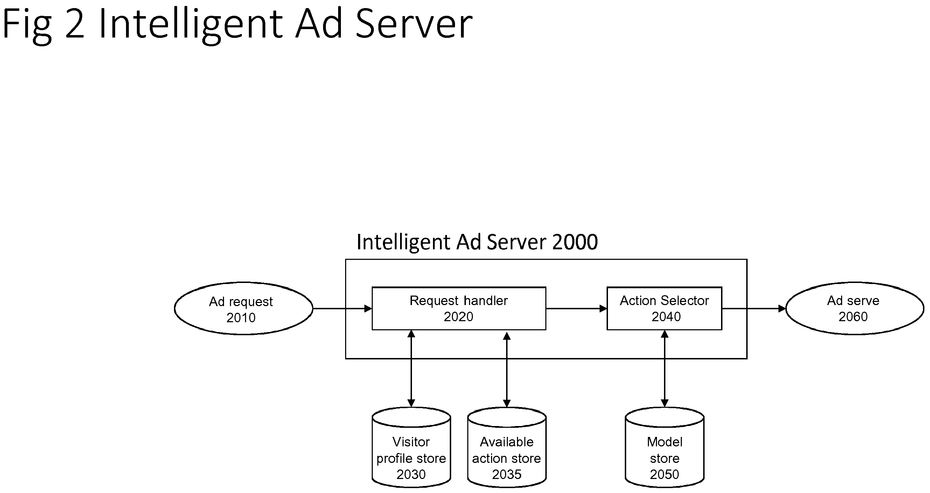

With reference to Figure 2, the process of deciding on a creative to be served, is triggered by receipt of a request for content identified by a user identifier (id). This user identified may take many forms, it could be a cookie id, device id or any other id identifying an individual person or device. In some embodiments, this trigger may include receipt of a request to display an advertisement in real-time on a user's device, 1010, where the system can decide whether to fill this advertisement request by selecting from several suitable advertisements, or whether to ignore it. In other embodiments, the trigger may be an internally generated request where the system decides whether to send one of several notifications to a particular user. Each action may also have a quota of serves required each day.

Once a request is received, a request handler, 2020, will query a visitor profile store, 2030, and retrieve a visitor profile containing the complete customer history associated with that user id. If the user id has not been seen before, a new, empty profile will be created. The request handler, 2020, will then query an available action store, 2035, for the set of all actions that are permissible to be served for this request. The available actions may be creatives to be displayed on a web page or mobile app, email message as part of a mailshot program, or any other communication with a user. Along with each action, there may be a list of operator defined restrictions on where the creative can be displayed. For example, prestige brands may only want their advertisements to appear on certain pre-vetted websites. The Request Handler, 2020, will take account of these restrictions and select the subset of all actions in the Available Action Store, 2035, that are valid for the request.

The visitor profile and set of available actions are then passed to an Action Selector, 2040, which operates to choose an optimal, or near optimal, action. The Action Selector, 2040, then retrieves a predictive model from a Model Store, 2050, to evaluate one or more actions and determine which one, if any, to choose. It may be computationally infeasible to evaluate all actions for many complex model types if there are more than a small number of actions. The system aims to choose a near optimal action at much lower computational cost than evaluating all actions, as described below. If an action is chosen, it is returned as a response to the original request, 2060.

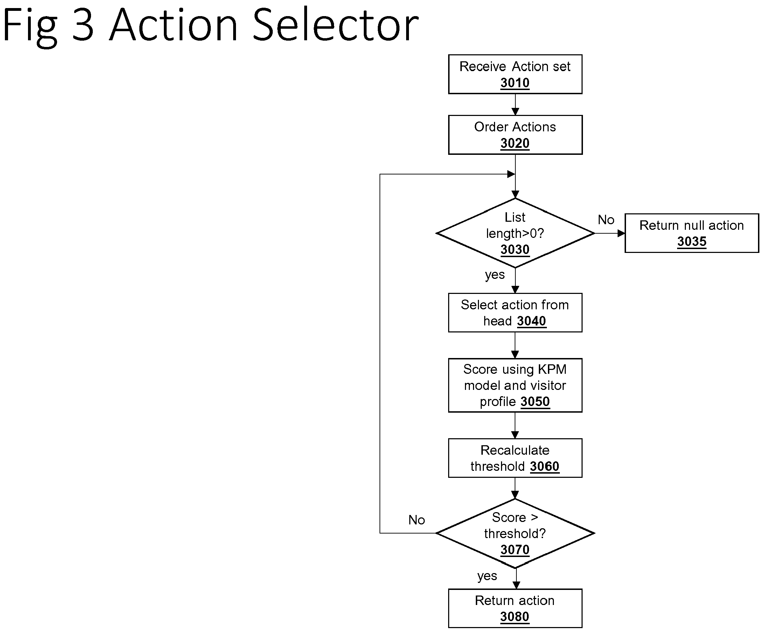

Figure 3 is a flow chart detailing the operation of the Action Selector 2040. The overall process is as follows. Before the computationally expensive predictive model from the Model Store 2050 is applied, the actions extracted from the action store 2035 are ranked and then taken from the top of that ranking one by one and passed to be scored by a KPM model. If the score is greater than a continually adjusting threshold, the process stops, and the action is chosen. If not, then the next action is chosen from the ranking. By such a process, the number of scoring operations is substantially reduced.

The threshold is typically adjusted in real-time, which is typically implemented by adjusting the threshold each time a request is received. So the typical steps would be:- Request is received, then the threshold is adjusted, and then a decision is made, whether to serve or not, based on the current threshold. Real-time in this context means; updated when every request is received and typically within a very short time period such as a few milliseconds.

In more detail, the process starts when an Action Set is received at 3010. The first step is to order the actions at 3020. Rather than scoring all actions using a complex predictive model, the actions are first ordered by a cheaper function. In one embodiment a bandit function, such as UCB is used. UCB will rank the available actions by their expected return to the general population and control the exploration/exploitation trade off.

In 3030 the ordered actions list length is checked. If the length is not greater than zero then the process exits, returning a null action, 3035. When the null action is selected then the Action Selector, 2040 will return no content at 2060, effectively ignoring the advertisement request.

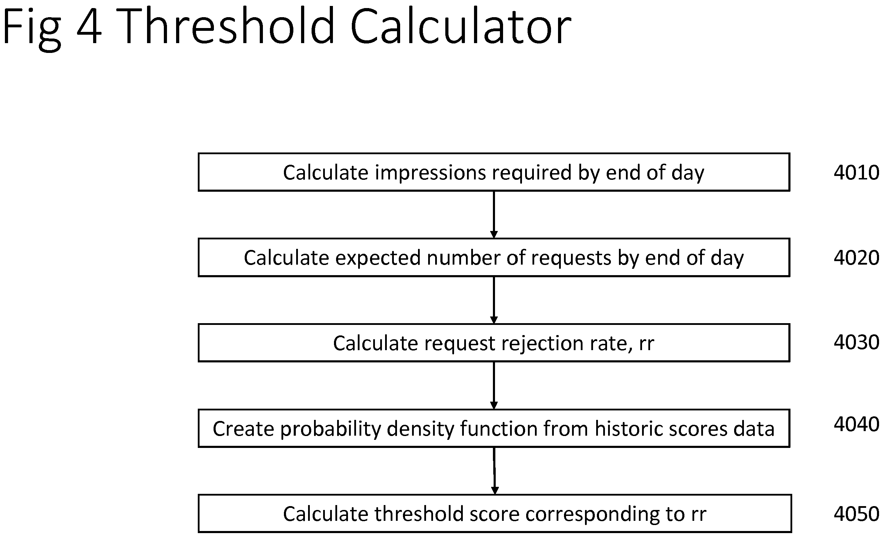

If the list length is greater than zero, the first action is selected and removed from the head of the Ordered Action List at 3040. At 3050 this action is then scored by a predictive model using the passed visitor profile. In 3060 a threshold is calculated or updated if the threshold has been previously calculated. There is one threshold for each creative in the system. This threshold is calculated from historical traffic patterns and the scores calculated on that traffic such that the number of expected scores above the threshold from the current time up to the end of the day, equals the remaining number of impressions required to be served today. In this way a desired number of advertisement serves is delivered each day. One embodiment of threshold calculation is described in Figure 4, below.

In 3070 the actual score from the KPM model is compared to the threshold. If the score is above the threshold then the loop terminates, and the current action is returned in 3080, and the creative it represents served to the recipient user. If the score is equal to or below the threshold then the next action is taken from the Ordered Action List at 3040 and the process repeated from step 3050 onwards.

Figure 4 is a flow chart detailing one embodiment of the threshold calculation process 3060. In this embodiment it is assumed there is a daily target of impressions specified for each creative. In 4010 the number impressions required by the end of the day is calculated. This is simply:

$$impressions\_required = target\_impressions\_per\_day - impressions\_served\_today - \text{Equation 1}$$

In 4020 the Threshold Calculator calculates expected number of requests the system will receive by the intelligent Ad Server, 2000, between the current time and the end of the day. It does this using historical data, averaging over the last n days where *n* is a configurable parameter.

In 4030 the required average request rejection rate is calculated to reach the end of the day and just serve the required number of impressions. This is:

$$required\_rejection\_rate = impressions\_required \ / \ expected\_requests\_received - \text{Equation 2}$$

In 4040 the probability density function over all scores is calculated. In one embodiment all scores are logged whenever the scoring module is called. All scores over some historic time period, say the last m days, are plotted in a histogram to estimate this function. From this histogram and the required request rejection rate the threshold score is calculated. The threshold score may be represented as a vertical line on the probability density function. This threshold is chosen so the area under the curve to the left of this threshold is equal to the required rejection rate.

The threshold continually adjusts so that the required quota of displays for each action are made each day. In this way, the number of times the complex model is called is reduced compared to calling the model for all available actions for each request.

**Claims**

1. A method of selecting data for delivery and display on a user device comprising the steps of:-

 (a) receiving a request for data to be delivered to a user, and the request including a user id which identifies the user,
 (b) retrieving information about the user from a visitor profile store using the user id,

(c) retrieving a set of possible actions from an actions store,

(d) ordering the retrieved actions using a relatively computationally cheap algorithm,

(e) taking the ordered actions and applying a relatively computationally expensive scoring algorithm using the retrieved information from the visitor profile store, and applied to each of the ordered actions in order, until the score is greater than a threshold, and

(f) delivering the action to a user device associated with the said user, for display thereon.

2. A method as claimed in claim 1, wherein the threshold is adjusted using historical data about the number of times an action has been delivered over a predetermined time period, and a predetermined desired number of deliveries of that action in the said time period, such that over time, the number of actual deliveries of the action over the said time period approaches the desired number of deliveries of that action over the said time period and where the threshold is adjusted updated within milliseconds when every request is received.

3. A method as claimed in claim 1 or 2 wherein the retrieved actions are ordered using a UCB function.

4. A method as claimed in any preceding claim wherein the threshold varies from action to action

5. A method as claimed in any preceding claim wherein the threshold is updated in batches, either one time for every n requests where n is a configurable parameter or one time for every t seconds where t is a configurable parameter.

6. A computer program product carrying program steps which when executed on suitable computer hardware causes the computer hardware to carry out the steps of any preceding claim.

7. A computer server arranged to

(a) receive a request for data to be delivered to a user, and the request including a user id which identifies the user,

(b) retrieve information about the user from a visitor profile store using the user Id,

(c) retrieve a set of possible actions from an actions store,

(d) order the retrieved actions using a relatively computationally cheap algorithm,

(e) take the ordered actions and apply a relatively computationally expensive scoring algorithm using the retrieved information from the visitor profile store, to each of the ordered actions in order, until the score is greater than a threshold, and

(f) deliver the action to a client user device associated with the said user and in network communication with the server, for display thereon.

8. A computer server as claimed in claim 7, further arranged to adjust the threshold using historical data about the number of times an action has been delivered over a predetermined time period, and a predetermined desired number of deliveries of that action in the said time period, such that over time, the number of actual deliveries of the action over the said time period approaches the desired number of deliveries of that action over the said time period.

9. A computer server as claimed in claim 7 or 8 arranged to order the retrieved actions using a UCB function.

**Amended claims in accordance with Rule 137(2) EPC.**

1. A method of selecting data for delivery and display on a user device comprising the steps of:-

(a) receiving a request for data to be delivered to a user, and the request including a user id which identifies the user,

(b) retrieving information about the user from a visitor profile store using the user id,

(c) selecting and retrieving a set of possible actions from an actions store dependent on the retrieved user information,

(d) ordering the retrieved actions using a relatively computationally cheap algorithm,

(e) taking the ordered actions and applying a relatively computationally expensive scoring algorithm using the retrieved information from the visitor profile store, and applying the computationally expensive scoring algorithm to each of the ordered actions in order, until the score is greater than a threshold, and

(f) delivering the action to a user device associated with the said user, whereby the requested data is made available for display thereon.

2. A method as claimed in claim 1, wherein the threshold is adjusted using historical data about the number of times an action has been delivered over a predetermined time period, and a predetermined desired number of deliveries of that action in the said time period, such that over time, the number of actual deliveries of the action over the said time period approaches the desired number of deliveries of that action over the said time period and where the threshold is adjusted updated within milliseconds when every request is received.

3. A method as claimed in claim 1 or 2 wherein the retrieved actions are ordered using a UCB function.

4. A method as claimed in any preceding claim wherein the threshold varies from action to action

5. A method as claimed in any preceding claim wherein the threshold is updated in batches, either one time for every n requests where n is a configurable parameter or one time for every t seconds where t is a configurable parameter.

6. A computer program product carrying program steps which when executed on suitable computer hardware causes the computer hardware to carry out the steps of any preceding claim.

7. A computer server arranged to

   (a) receive a request for data to be delivered to a user, and the request including a user id which identifies the user,
   (b) retrieve information about the user from a visitor profile store using the user Id,
   (c) select and retrieve a set of possible actions from an actions store dependent on the retrieved user information,
   (d) order the retrieved actions using a relatively computationally cheap algorithm,
   (e) take the ordered actions and apply a relatively computationally expensive scoring algorithm using the retrieved information from the visitor profile store, to each of the ordered actions in order, until the score is greater than a threshold, and
   (f) deliver the action to a client user device associated with the said user and in network communication with the server, whereby the requested data is made available for display thereon.

8. A computer server as claimed in claim 7, further arranged to adjust the threshold using historical data about the number of times an action has been delivered over a predetermined time period, and a predetermined desired number of deliveries of that action in the said time period, such that over time, the number of actual deliveries of the action over the said time period approaches the desired number of deliveries of that action over the said time period.

9. A computer server as claimed in claim 7 or 8 arranged to order the retrieved actions using a UCB function.

Fig 1

Intelligent Ad Server 2000

1040

network

1010
1020
1030

user device

1010
1020
1030

user device

# Fig 2 Intelligent Ad Server

Intelligent Ad Server 2000

- Ad request 2010
- Request handler 2020
- Action Selector 2040
- Ad serve 2060
- Visitor profile store 2030
- Available action store 2035
- Model store 2050

# Fig 3 Action Selector

Receive Action set
**3010**

Order Actions
**3020**

List length>0?
**3030**

No → Return null action **3035**

yes

Select action from head **3040**

Score using KPM model and visitor profile **3050**

Recalculate threshold **3060**

Score > threshold?
**3070**

No

yes

Return action
**3080**

EP 3 594 885 A1

# Fig 4 Threshold Calculator

| | |
|---|---|
| Calculate impressions required by end of day | 4010 |
| Calculate expected number of requests by end of day | 4020 |
| Calculate request rejection rate, rr | 4030 |
| Create probability density function from historic scores data | 4040 |
| Calculate threshold score corresponding to rr | 4050 |

Europäisches
Patentamt

European
Patent Office

Office européen
des brevets

## EUROPEAN SEARCH REPORT

**Application Number**

EP 18 18 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/246906 A1 (CATLIN TIMOTHY J O [US] ET AL) 6 October 2011 (2011-10-06) * paragraph [0008] - paragraph [0054] * ----- | 1-9 | INV. G06Q30/02 |
| X | US 2012/016642 A1 (LI LIHONG [US] ET AL) 19 January 2012 (2012-01-19) * paragraph [0003] - paragraph [0088] * ----- | 1-9 | |
| X | US 2015/006295 A1 (LIU KUN [US] ET AL) 1 January 2015 (2015-01-01) * paragraph [0019] - paragraph [0116] * ----- | 1-9 | |

TECHNICAL FIELDS
SEARCHED (IPC)

G06Q

The present search report has been drawn up for all claims

| Place of search | Date of completion of the search | Examiner |
|---|---|---|
| The Hague | 8 August 2018 | Pomocka, Marek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 18 3008

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2018

| Patent document cited in search report | | Publication date | Patent family member(s) | | Publication date |
|---|---|---|---|---|---|
| US 2011246906 | A1 | 06-10-2011 | US | 2009282343 A1 | 12-11-2009 |
| | | | US | 2011246906 A1 | 06-10-2011 |
| | | | US | 2011252330 A1 | 13-10-2011 |
| | | | US | 2014372901 A1 | 18-12-2014 |
| US 2012016642 | A1 | 19-01-2012 | US | 2012016642 A1 | 19-01-2012 |
| | | | US | 2015051973 A1 | 19-02-2015 |
| US 2015006295 | A1 | 01-01-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AUER, P. ; CESA-BIANCHI, N. ; FISCHER, P.** *Machine Learning,* 2002, vol. 47, 235